# EUROPÄISCHE PATENTANMELDUNG

(11) **EP 2 514 589 A1**
(43) Veröffentlichungstag der Anmeldung: **24.10.2012**
(21) Anmeldenummer: 12002343.7
(22) Anmeldetag: 30.03.2012
(51) Int. Cl.: B32B 15/08, B32B 15/09, B32B 38/10

(54) **Verfahren zur Herstellung einer bereichsweise beschichteten Trägerstruktur**

(30) Priorität: 20.04.2011 DE 102011018342
(71) Anmelder: Heraeus Materials Technology GmbH & Co. KG, 63450 Hanau (DE)
(72) Erfinder: Wachter, Jürgen, Dr., 63322 Ober-Roden (DE); Müller, Johannes, 63637 Jossgrund (DE); Roth Josef, 63856 Bessenbach (DE)
(74) Vertreter: Kühn, Hans-Christian

(57) **Zusammenfassung**

Die Erfindung betrifft ein Verfahren zur Herstellung einer bereichsweise beschichteten Trägerstruktur umfassend ein mit einer Beschichtung beschichtetes Trägerband, bei dem eine Schutzfolie zumindest bereichsweise auf die Beschichtung aufgebracht wird, die Beschichtung bereichsweise vom Trägerband entfernt wird und die Schutzfolie von der Beschichtung entfernt wird.

Die Erfindung betrifft auch ein mit einem solchen Verfahren hergestellte Trägerstruktur und eine Vorrichtung zum Herstellen einer bereichsweise beschichteten Trägerstruktur mit einem solchen Verfahren, wobei die Vorrichtung eine erste Fördereinrichtung zum Fördern eines mit einer Beschichtung beschichteten Trägerbands und eine Auftrageeinrichtung zum zumindest bereichsweisen Auftragen einer Schutzfolle auf die Beschichtung umfasst, wobei die Vorrichtung zumindest ein Werkzeug umfasst, mit dem die Beschichtung bereichsweise vom Trägerband entfernbar ist.

## Beschreibung

Die Erfindung betrifft ein Verfahren zur Herstellung einer bereichsweise beschichteten Trägerstruktur umfassend ein mit einer Beschichtung beschichtetes Trägerband.

Die Erfindung betrifft auch ein nach dem Verfahren hergestellte Trägerstruktur und eine Vorrichtung zum Herstellen einer bereichsweise beschichteten Trägerstruktur mit einem solchen Verfahren.

Bei der Herstellung von bondfähigen Trägerstrukturen können diese für bestimmte Anwendungen derart aufgebaut werden, dass sie bondfähige und nicht bondfähige Oberflächen aufweisen. Dazu kann eine zuvor auf einem Trägerband aufgetragene bondfähige Beschichtung bereichsweise wieder entfernt werden.

Nachteilig ist hieran, dass beim Entfernen der Beschichtung Reste, wie beispielsweise Späne entstehen können, die sich auf der bondfähigen Beschichtung ablagern und diese dadurch beeinträchtigen. Wenn solche Reste nicht sorgfältig und damit aufwendig von den Beschichtungen entfernt werden, führt dies zu einem Ausschuss bei der Herstellung der Trägerstrukturen.

Die Aufgabe der Erfindung besteht also darin, die Nachteile des Stands der Technik zu überwinden. Insbesondere soll eine möglichst einfache und kostengünstige Methode gefunden werden, eine Trägerstruktur aufzubauen, bei der weniger Ausschuss zu befürchten ist. Gleichzeitig soll die Methode aber auch gut bei einer schnellen Massenproduktion umsetzbar sein. Aufgabe der Erfindung ist es auch eine Vorrichtung bereitzustellen, mit der eine solche Trägerstruktur erzeugbar ist, sowie eine derart gefertigte Trägerstruktur zu liefern.

Die Aufgabe der Erfindung wird dadurch gelöst, dass eine Schutzfolie zumindest bereichsweise auf die Beschichtung aufgebracht wird, die Beschichtung bereichsweise vom Trägerband entfernt wird und die Schutzfolie von der Beschichtung entfernt wird.

Dadurch wird erreicht, dass die bondfähigen beschichteten Oberflächen beim Entfernen der Beschichtung an den Stellen, an denen ein nicht bondfähiger Bereich erzeugt werden soll, nicht mit Resten der Beschichtung verunreinigt werden können. Entstehende Verunreinigungen lagern sich auf der Schutzfolie ab und werden mit dem Entfernen der Schutzfolie von der Trägerstruktur entfernt. Die Schutzfolie kann auch aus mehreren separaten Stücken bestehen, die an verschiedenen Stellen auf die Beschichtung aufgetragen wird. Alle Bereiche, die vor Resten der Beschichtung geschützt werden sollen, können dazu von der Schutzfolie bedeckt werden.

Es kann erfindungsgemäß auch vorgesehen sein, dass in einem ersten Schritt eine Schutzfolie zumindest bereichsweise auf die Beschichtung aufgebracht wird, in einem zweiten Schritt nach dem ersten Schritt die Beschichtung bereichsweise vom Trägerband entfernt wird und in einem dritten Schritt nach dem zweiten Schritt die Schutzfolie von der Beschichtung entfernt wird.

Durch diese zeitliche Abfolge wird sichergestellt, dass die Schutzfolie auch umherfliegende Verunreinigungen, die beim Entfernen der Beschichtung entstehen können, davon abhält, sich auf den Bereichen der Beschichtung niederzuschlagen, deren Oberflächen rein bleiben müssen, während bei einer Gleichzeitigen Durchführung der Arbeitsschritte noch die Gefahr einer geringen Verunreinigung besteht.

Besonders vorteilhafte Ausgestaltungen des Verfahrens zeichnen sich dadurch aus, dass die Beschichtung mechanisch vom Trägerband entfernt wird, vorzugsweise durch Abschälen, besonders bevorzugt mit einer Kante zumindest eines Schälwerkzeugs abgeschält wird.

Dabei kann die Beschichtung in einem Bereich oder an mehreren Bereichen entfernt werden. Das mechanische Entfernen ist besonders einfach zu realisieren und die mit der Schutzfolie beschichteten Bereiche der Beschichtung sind gegen die dabei auftretenden Verunreinigungen gut geschützt, während eine chemische Entfernung oder einer Abtragung durch Laser oder Teilchenstrahlen besondere Anforderungen an die Schutzfolie stellen.

Es kann auch vorgesehen sein, dass die Schutzfolie durch Aufkleben oder Anhaften auf die Beschichtung aufgebracht wird.

Besonders das Aufkleben, aber auch das Anhaften verbindet die Schutzfolie mit der Beschichtung, so dass sie bei der weiteren Verarbeitung an den Stellen verbleibt, an denen sie aufgetragen wird und die durch die Schutzfolie geschützt werden sollen.

Gemäß einer weiteren erfindungsgemäßen Ausgestaltung des Verfahrens kann vorgesehen sein, dass die Schutzfolie und das mit der Beschichtung beschichtete Trägerband bereichsweise parallel zueinander gefördert werden, insbesondere in die gleiche Richtung, bevorzugt mit der gleichen Fördergeschwindigkeit.

Diese Maßnahme sichert eine einfache und kostengünstige Realisierung eines Massenproduktionsverfahrens. Besonders bei der Verarbeitung von endlosen Bahnen des Trägerbands und der Schutzfolie ist dies eine geeignete Maßnahme, um eine einfache Produktionsanlage aufzubauen.

Ferner kann vorgesehen sein, dass die Schutzfolie durch Abziehen und/oder chemisch von der Beschichtung entfernt wird.

Auch diese Maßnahme dient der Massenherstellung der Trägerstrukturen. Im Zusammenhang mit dem Aufkleben der Schutzfolie ist es besonders bevorzugt, die Schutzfolie wieder abzuziehen. Um ein problemloses Abziehen der Schutzfolie zu ermöglichen, kann ein Kleber mit einer geeigneten, geringen Haftkraft verwendet werden. Die Kleberreste können bei einem anschließenden Reinigungsschritt auch chemisch von der Beschichtung entfernt werden.

Gemäß einer weiteren Ausgestaltung der Erfindung kann vorgesehen sein, dass das Trägerband mit der Beschichtung, insbesondere vor dem ersten Schritt, beschichtet wird.

Die Einbeziehung des Beschichtungsschritts führt zu einer weiteren Vereinfachung des Herstellungsverfahrens und komplettiert dieses.

Dabei kann vorgesehen sein, dass die Beschichtung auf dem Trägerband galvanisch veredelt wird

Eine galvanische Veredelung führt zu einer besseren Bondbarkeit der beschichteten Bereiche.

Es kann auch vorgesehen sein, dass die Beschichtung durch Walzplattieren auf dem Trägerband aufgebracht wird.

Das Walzplattieren der Beschichtung mit dem Trägerband liefert eine effiziente und stabile Beschichtungsmethode, die zudem für die Massenfertigung besonders gut geeignet ist.

Ferner kann vorgesehen sein, dass das Trägerband oder das mit der Beschichtung beschichtete Trägerband und/oder die Schutzfolie als zumindest bereichsweise aufgerollte Endlosbahnen vorliegen, die während des Verfahrens abgerollt werden.

Solche Endlosbahnen sind besonders einfach in einem industriellen Prozess in der Massenproduktion zu verarbeiten. Unter einer Endlosbahn sind selbstverständlich nicht tatsächlich unendlich lange Bahnen zu verstehen. Die Bahnen können beispielsweise ungefähr einige Meter bis einige Kilometer lang sein.

Es kann auch vorgesehen sein, dass die von der Beschichtung entfernte Schutzfolie und/oder die durch das Verfahren hergestellte Trägerstruktur als Endlosbahn aufgerollt wird oder werden, wobei vorzugsweise vor dem Aufrollen der Trägerstruktur eine zweite Schutzfolie, besonders bevorzugt eine Papierschutzfolie auf die bereichsweise beschichtete Trägerstruktur gelegt und mit aufgerollt wird.

Das Aufrollen führt zu einem gut weiterverarbeitbaren Massenprodukt, da lange Bahnen platzsparend gelagert und Transportiert werden können. Die zusätzliche zweite Schutzfolie soll die Oberfläche der Trägerstruktur schützen, wenn sie beispielsweise beim Aufrollen der Trägerstruktur mit der Unterseite der Trägerstruktur in Berührung kommt.

Besonders bevorzugt kann vorgesehen sein, dass auf Bereichen, bei denen die Beschichtung entfernt werden soll, keine Schutzfolie aufgebracht wird.

Durch diese Maßnahme wird erreicht, dass die Schutzfolie nicht beim Entfernen der Beschichtung stört. Dadurch kann zum Einen Material der Schutzfolie gespart werden und zum Anderen ein einfaches Verfahren beim bereichsweisen Entfernen der Beschichtung zum Einsatz kommen.

Auch kann vorgesehen sein, dass die Beschichtung das Trägerband vor dem bereichsweisen Entfernen der Beschichtung auf zumindest einer Seite vollständig bedeckt.

Durch die vollständige Bedeckung muss nicht darauf geachtet werden, dass ein Bereich ausgelassen wird. Dies vereinfacht den Beschichtungsprozess erheblich. Alle Bereiche der herzustellenden Trägerstruktur, die unbeschichtet sein sollen, müssen dann von der Beschichtung befreit werden.

Besonders vorteilhafte Ausgestaltungen des Verfahrens zeichnen sich dadurch aus, dass als Trägerband ein metallisches Band verwendet wird, vorzugsweise aus einer Kupferlegierung, besonders bevorzugt aus CuSn₆, und/oder als Schutzfolie eine Kunststofffolie verwendet wird, vorzugsweise eine einseitig mit Kleber beschichtete Kunststofffolie, insbesondere eine PET-Folie, und/oder als Beschichtung eine metallische Beschichtung, vorzugsweise mit einer bondfähigen Oberfläche, insbesondere eine Al-Si-Legierung verwendet wird.

Die genannten Materialien eignen sich besonders gut zur Umsetzung des Verfahrens.

Es kann auch vorgesehen sein, dass das Trägerband eine Dicke von 0,1 mm bis 2 mm hat, vorzugsweise eine Dicke von 0,6 mm bis 1 mm.

Ferner kann vorgesehen sein, dass das Trägerband eine Breite von 5 mm bis 500 mm hat, bevorzugt eine Breite von 10 mm bis 200 mm, ganz besonders bevorzugt eine Breite von 20 mm bis 120 mm.

Gemäß einer weiteren Ausgestaltung der Erfindung kann es vorgesehen sein, dass die Beschichtung eine Dicke von 10 µm bis 100 µm, vorzugsweise von 50 µm bis 70 µm hat.

Auch kann vorgesehen sein, dass die Schutzfolie eine Dicke von 5 µm bis 500 µm hat, bevorzugt eine Dicke von 10 µm bis 150 µm, besonders bevorzugt eine Dicke von 50 µm bis 100 µm, ganz besonders bevorzugt von 80 µm.

Bei den geschilderten Abmessungen für das Trägerband, die Beschichtung und die Schutzfolie ist eine Massenfertigung besonders leicht und kostengünstig umsetzbar. Zudem sind die gefertigten Trägerstrukturen einfach weiterzuverarbeiten.

Ferner kann vorgesehen sein, dass die Breite des Bereichs, bei dem die Beschichtung nicht abgeschält wird 1 mm bis 50 mm breit ist, vorzugsweise 5 mm bis 15 mm breit ist.

Die Aufgabe der Erfindung wird auch durch eine bereichsweise beschichtete Trägerstruktur hergestellt mit einem solchen Verfahren gelöst.

Die Aufgabe der Erfindung wird auch gelöst durch eine Vorrichtung zum Herstellen einer bereichsweise beschichteten Trägerstruktur mit einem solchen Verfahren, wobei die Vorrichtung eine erste Fördereinrichtung zum Fördern eines mit einer Beschichtung beschichteten Trägerbands und eine Auftrageeinrichtung zum zumindest bereichsweisen Auftragen einer Schutzfolie auf die Beschichtung umfasst, wobei die Vorrichtung zumindest ein Werkzeug umfasst, mit dem die Beschichtung bereichsweise vom Trägerband entfernbar ist.

Die Auftrageeinrichtung kann ein einfaches Walzensystem sein, mit dem die Schutzfolie auf die Beschichtung des Trägerbands gedrückt wird. Die Schutzfolie und/oder das beschichtete Trägerband werden dazu als aufgerollte Bahnen gelagert und maschinell verarbeitet.

Dabei kann vorgesehen sein, dass das Trägerband und die Schutzfolie bereichsweise parallel zueinander förderbar sind.

Der Erfindung liegt die überraschende Erkenntnis zugrunde, dass es durch eine einfache Maßnahme, wie dem Auftragen einer Schutzfolie möglich ist, eine Verunreinigung der Oberflächen der Beschichtung einer Trägerstruktur bei der Herstellung derselben zu reduzieren oder sogar zu vermeiden. Dadurch wird wesentlich weniger oder gar kein Ausschuss mehr produziert, was Ressourcen schont und Kosten spart. Die vor allem bei einem Abschälen von Bereichen der Beschichtung erzeugten Späne gelangen nicht zur Oberfläche der übrigbleibenden Beschichtung, sondern verbleiben auf der Schutzfolie.

Dazu kann besonders bevorzugt auch vorgesehen sein, dass die Oberfläche der Schutzfolie derart ausgestaltet ist, dass die zu erwartenden Späne gut auf dieser Oberfläche haften oder kleben bleiben.

Die verschmutzte Schutzfolie kann nach dem Entfernen der Beschichtung einfach wieder abgezogen werden, womit auch die auf der Oberfläche der Schutzfolie liegenden Verunreinigungen entfernt werden. Um eine Verunreinigung durch eventuell von der Schutzfolie auf die Beschichtung herabfallende Partikel zu vermeiden, kann erfindungsgemäß auch vorgesehen sein, dass nach dem Entfernen der Schutzfolie die Beschichtung mit einem Fluidstrom gereinigt wird. Der Fluidstrom kann ein flüssiges Lösungsmittel sein, mit dem auch andere Verunreinigungen entfernt werden können oder es kann ein einfacher Luftstrom sein, mit dem die Partikel weggeblasen werden.

Im Folgenden werden Ausführungsbeispiele der Erfindung anhand von drei schematisch dargestellten Figuren erläutert, ohne jedoch dabei die Erfindung zu beschränken. Dabei zeigt:
- Figur 1:: eine schematische Querschnittansicht einer erfindungsgemäßen Vorrichtung für ein erfindungsgemäßes Verfahren;
- Figur 2:: eine schematische Querschnittansicht eines beschichteten Trägerbands auf den eine Schutzfolie aufgebracht wurde; und
- Figur 3:: eine schematische Aufsicht auf ein beschichtetes Trägerband mit Schutzfolie.

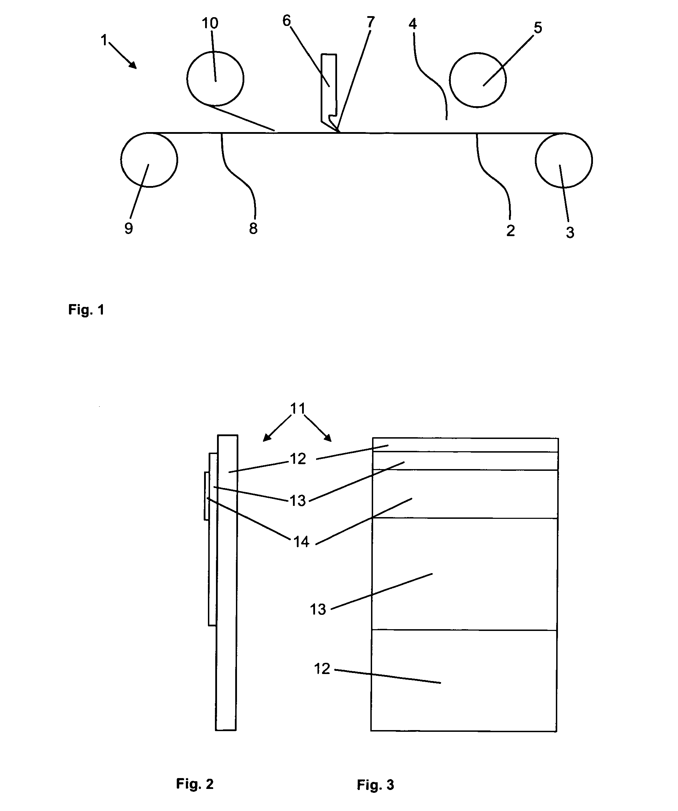

Figur 1 zeigt eine schematische Querschnittansicht einer erfindungsgemäßen Vorrichtung 1 zur Herstellung einer Trägerstruktur. Ein beschichtetes Trägerband 2, das von einer Rolle 3 abgewickelt wird, wird in der Vorrichtung 1 mit einer Schutzfolie 4 aus PET beschichtet. Die Schutzfolie 4 haftet auf der Oberfläche des beschichteten Trägerbands 2. Das beschichtete Trägerband 2 besteht aus einer Kupferlegierung, die einseitig mit einer Aluminium-Silicium-Legierung beschichtet ist. Die beschichtete Seite liegt oben auf, so dass die Schutzfolie 4 auf die beschichtete Seite des beschichteten Trägerbands 2 aufgetragen wird.

Die Schutzfolie 4 ist ebenfalls auf einer Rolle 5 aufgewickelt. Die Bänder des Trägerbands 2 und der Schutzfolie 4 werden von der Vorrichtung 1 mit Hilfe von Motoren von den Rollen 3, 5 abgewickelt. Durch Umlenken der Schutzfolie 4 werden die Schutzfolie 4 und das Trägerband 2 über eine gewisse Strecke parallel geführt. In diesem Bereich haftet die Schutzfolie 4 auf dem beschichteten Trägerband 2. Die Schutzfolie 4 ist schmaler als das beschichtete Trägerband 2, so dass nicht die gesamte Breite des beschichteten Trägerbands 2 durch die Schutzfolie 4 abgedeckt wird. Die Schutzfolie 4 und das beschichtete Trägerband 2 werden mit gleicher Geschwindigkeit, in Figur 1 von rechts nach links gefördert.

In dem Bereich, in dem die Schutzfolie 4 bereichsweise auf der Beschichtung des Trägerbands 2 aufgebracht ist, greift ein Schälwerkzeug 6 mit einer Kante 7 oder Klinge 7 in den Teil des beschichteten Trägerbands 2 ein, der nicht durch die Schutzfolie 4 bedeckt ist. Das Schälwerkzeug 6 schält den Teil der Beschichtung des Trägerbands 2 ab, der nicht durch die Schutzfolie 4 bedeckt ist. Die dabei erzeugten Späne bleiben nicht auf der Beschichtung des Trägerbands 2 liegen, da diese durch die Schutzfolie 4 abgedeckt ist.

Anschließend wird die Schutzfolie 2 mit den darauf liegenden Spänen abgezogen. Die fertige Trägerstruktur 8 wird auf einer Rolle 9 aufgewickelt, während die mit den Spänen verunreinigte Schutzfolie 2 auf eine weitere Rolle 10 aufgewickelt wird. Auf der Unterseite des Trägerbands 2 kann eine Papierschutzfolie (nicht gezeigt) angeordnet sein, die beim Aufwickeln der Trägerstruktur 8 verhindert, dass die Rückseite der Trägerstruktur 8 die bereichsweise beschichtete Vorderseite der Trägerstruktur 8 beim Aufrollen beeinträchtigt, das heißt beispielsweise zerkratzt.

Figur 2 zeigt in einer schematischen Querschnittansicht ein Zwischenprodukt 11 zu der zu erzeugenden Trägerstruktur, vorliegend ein beschichtetes Trägerband 12 mit Schutzfolie 14, das in Figur 3 in schematischer Aufsicht dargestellt ist. Auf dem Trägerband 12 ist eine Beschichtung 13 angeordnet, die beispielsweise durch Walzplattieren aufgetragen wurde. Auf einem Teil der Beschichtung 13 ist die Schutzfolie 14 angeordnet.

Das gezeigte Zwischenprodukt 11 kann so vor oder auch nach dem bereichsweisen Entfernen der Beschichtung 13 vorliegen.

Im ersten Fall (das Zwischenprodukt 11 ist vor dem bereichsweisen Entfernen der Beschichtung 13 dargestellt) wurde nicht die gesamte Oberfläche des Trägerbands 12 mit der Beschichtung 13 beschichtet. Manche Teile liegen frei. Ein Teil der Beschichtung 13 wurde mit der Schutzfolie 14 überklebt. Ein Schälwerkzeug (nicht gezeigt) oder eine andere Vorrichtung, die zum Entfernen der Schutzfolie 14 geeignet ist, entfernt in einem folgenden Schritt alle unbedeckten Bereiche der Beschichtung 13 oder Teile davon. Anschließend wird die Schutzfolie 14 mit den darauf liegenden Spänen und Resten der Beschichtung 13 abgezogen. Zurück bleibt die zu erzeugende Trägerstruktur, ohne dass durch die Späne ein Ausschuss entstehen würde. Dabei reicht es aus, nur die Teile der Beschichtung 13 mit der Schutzfolie 14 abzukleben, die durch die Verunreinigungen beeinträchtigt würden, das heißt, dass es nicht zwingend notwendig ist, die gesamte Beschichtung 13 mit der Schutzfolie 14 zu bekleben.

Im zweiten Fall (das Zwischenprodukt 11 ist nach dem bereichsweisen Entfernen der Beschichtung 13 dargestellt) wurde nur ein besonders zu schützender Bereich der Beschichtung 13 mit der Schutzfolie 14 beklebt. Die Beschichtung 13 erstreckte sich vor dem bereichsweisen Entfernen der Beschichtung 13 über die gesamte Oberfläche des Trägerbands 12. In dem nun folgenden Schritt wird die Schutzfolie 14 mit allen darauf haftenden Schmutzpartikeln abgezogen und die fertige Trägerstruktur bestehend aus dem Trägerband 12 und der Beschichtung 13 ist fertiggestellt.

In beiden Fällen kann die Beschichtung 13 zumindest bereichsweise vor den schädlichen Einflüssen von Resten, die beim Entfernen der Beschichtung 13 entstehen, geschützt werden.

Als Schutzfolie 4, 14 kann beispielsweise ein kostengünstig zu erhaltender Klebestreifen, wie zum Beispiel ein TESA^{®}-Film verwendet werden.

Die in der voranstehenden Beschreibung, sowie den Ansprüchen, Figuren und Ausführungsbeispielen offenbarten Merkmale der Erfindung können sowohl einzeln, als auch in jeder beliebigen Kombination für die Verwirklichung der Erfindung in ihren verschiedenen Ausführungsformen wesentlich sein.

### Bezugszeichenliste

- 1: Vorrichtung
- 2: beschichtetes Trägerband
- 3: aufgerolltes Trägerband
- 4: Schutzfolie
- 5: aufgerollte Schutzfolie
- 6: Schälwerkzeug
- 7: Kante / Klinge
- 8: Trägerstruktur
- 9: aufgerollte Trägerstruktur
- 10: aufgerollte Schutzfolie
- 11: beschichtetes Trägerband mit Schutzfolie
- 12: Trägerband
- 13: Beschichtung
- 14: Schutzfolie

## Patentansprüche

1. Verfahren zur Herstellung einer bereichsweise beschichteten Trägerstruktur (8) umfassend ein mit einer Beschichtung (13) beschichtetes Trägerband (2, 12), **dadurch gekennzeichnet, dass**
eine Schutzfolie (4, 14) zumindest bereichsweise auf die Beschichtung (13) aufgebracht wird,
die Beschichtung (13) bereichsweise vom Trägerband (2, 12) entfernt wird und
die Schutzfolie (4, 14) von der Beschichtung (13) entfernt wird.

2. Verfahren nach Anspruch 1, **dadurch gekennzeichnet, dass**
in einem ersten Schritt eine Schutzfolie (4, 14) zumindest bereichsweise auf die Beschichtung (13) aufgebracht wird,
in einem zweiten Schritt nach dem ersten Schritt die Beschichtung (13) bereichsweise vom Trägerband (2, 12) entfernt wird und
in einem dritten Schritt nach dem zweiten Schritt die Schutzfolie (4, 14) von der Beschichtung (13) entfernt wird.

3. Verfahren nach Anspruch 1 oder 2, **dadurch gekennzeichnet, dass** die Beschichtung (13) mechanisch vom Trägerband (2, 12) entfernt wird, vorzugsweise durch Abschälen, besonders bevorzugt mit einer Kante (7) zumindest eines Schälwerkzeugs (6) abgeschält wird.

4. Verfahren nach einem der vorangehenden Ansprüche, **dadurch gekennzeichnet, dass** die Schutzfolie (4, 14) durch Aufkleben oder Anhaften auf die Beschichtung (13) aufgebracht wird.

5. Verfahren nach einem der vorangehenden Ansprüche, **dadurch gekennzeichnet, dass** die Schutzfolie (4, 14) und das mit der Beschichtung (13) beschichtete Trägerband (2, 12) bereichsweise parallel zueinander gefördert werden, insbesondere in die gleiche Richtung, bevorzugt mit der gleichen Fördergeschwindigkeit.

6. Verfahren nach einem der vorangehenden Ansprüche, **dadurch gekennzeichnet, dass** die Schutzfolie (4, 14) durch Abziehen und/oder chemisch von der Beschichtung (13) entfernt wird.

7. Verfahren nach einem der vorangehenden Ansprüche, **dadurch gekennzeichnet, dass** das Trägerband (2, 12) mit der Beschichtung (13), insbesondere vor dem ersten Schritt, beschichtet wird, wobei vorzugsweise die Beschichtung (13) auf dem Trägerband (2, 12) galvanisch veredelt wird und/oder die Beschichtung (13) durch Walzplattieren auf dem Trägerband (2, 12) aufgebracht wird.

8. Verfahren nach einem der vorangehenden Ansprüche, **dadurch gekennzeichnet, dass** das Trägerband (2, 12) oder das mit der Beschichtung (13) beschichtete Trägerband (2, 12) und/oder die Schutzfolie (4, 14) als zumindest bereichsweise aufgerollte Endlosbahnen (2, 3) vorliegen, die während des Verfahrens abgerollt werden.

9. Verfahren nach einem der vorangehenden Ansprüche, **dadurch gekennzeichnet, dass** die von der Beschichtung (13) entfernte Schutzfolie (4, 14) und/oder die durch das Verfahren hergestellte Trägerstruktur (8) als Endlosbahn aufgerollt wird oder werden, wobei vorzugsweise vor dem Aufrollen der Trägerstruktur (8) eine zweite Schutzfolie, besonders bevorzugt eine Papierschutzfolie auf die bereichsweise beschichtete Trägerstruktur (8) gelegt und mit aufgerollt wird.

10. Verfahren nach einem der vorangehenden Ansprüche, **dadurch gekennzeichnet, dass** auf Bereichen, bei denen die Beschichtung (13) entfernt werden soll, keine Schutzfolie (4, 14) aufgebracht wird.

11. Verfahren nach einem der vorangehenden Ansprüche, **dadurch gekennzeichnet, dass** die Beschichtung (13) das Trägerband (2, 12) vor dem bereichsweisen Entfernen der Beschichtung (13) auf zumindest einer Seite vollständig bedeckt.

12. Verfahren nach einem der vorangehenden Ansprüche, **dadurch gekennzeichnet, dass** als Trägerband (2, 12) ein metallisches Band verwendet wird, vorzugsweise aus einer Kupferlegierung, besonders bevorzugt aus CuSn₆, und/oder als Schutzfolie (4, 14) eine Kunststofffolie verwendet wird, vorzugsweise eine einseitig mit Kleber beschichtete Kunststofffolie, insbesondere eine PET-Folie, und/oder als Beschichtung (13) eine metallische Beschichtung (13), vorzugsweise mit einer bondfähigen Oberfläche, insbesondere eine Al-Si-Legierung verwendet wird.

13. Bereichsweise beschichtete Trägerstruktur (8) hergestellt mit einem Verfahren nach einem der vorangehenden Ansprüche.

14. Vorrichtung (1) zum Herstellen einer bereichsweise beschichteten Trägerstruktur (8) mit einem Verfahren nach einem der Ansprüche 1 bis 12, **dadurch gekennzeichnet, dass** die Vorrichtung (1) eine erste Fördereinrichtung zum Fördern eines mit einer Beschichtung (13) beschichteten Trägerbands (2, 12) und eine Auftrageeinrichtung zum zumindest bereichsweisen Auftragen einer Schutzfolie (4, 14) auf die Beschichtung (13) umfasst, wobei die Vorrichtung (1) zumindest ein Werkzeug (6) umfasst, mit dem die Beschichtung (13) bereichsweise vom Trägerband (2, 12) entfernbar ist.

15. Vorrichtung (1) nach Anspruch 14, **dadurch gekennzeichnet, dass**
das Trägerband (2, 12) und die Schutzfolie (4, 14) bereichsweise parallel zueinander förderbar sind.
